# EUROPÄISCHE PATENTSCHRIFT

(11) **EP 2 627 933 B1**
(45) Veröffentlichungstag und Bekanntmachung des Hinweises auf die Patenterteilung: **16.12.2015**
(21) Anmeldenummer: 11764790.9
(22) Anmeldetag: 07.10.2011
(51) Int. Cl.: F16J 15/18, F16J 15/32

(54) **DICHTUNGSANORDNUNG**
SEALING ASSEMBLY
GARNITURE D'ÉTANCHÉITÉ

(30) Priorität: 12.10.2010 DE 102010042324
(43) Veröffentlichungstag der Anmeldung: 21.08.2013
(73) Patentinhaber: Dürr Systems GmbH, 74321 Bietigheim-Bissingen (DE)
(72) Erfinder: KINCSES, Michael, 70327 Stuttgart (DE); LAUER, Michael, 70435 Stuttgart (DE); KREISS, Werner, 74357 Bönnigheim (DE)
(74) Vertreter: Hoeger, Stellrecht & Partner Patentanwälte mbB
(86) Internationale Anmeldenummer: PCT/EP2011/067597
(87) Internationale Veröffentlichungsnummer: WO 2012/049097

(56) Entgegenhaltungen:
- FR-A- 1 542 641
- FR-A1- 2 643 968
- US-A- 756 880
- US-A- 5 622 371

## Beschreibung

Die vorliegende Erfindung betrifft eine Dichtungsanordnung zum Abdichten eines Zwischenraums zwischen einem ersten Bauteil und einem relativ zu dem ersten Bauteil um eine Drehachse drehbaren zweiten Bauteil.

Eine solche Dichtungsanordnung wird beispielsweise benötigt, um bei einer Fördervorrichtung zum Einbringen eines Werkstücks in ein Behandlungsbad eines flüssigen Mediums ein Drehlager eines beweglichen Bauteils vor dem Eindringen des flüssigen Mediums oder von Dämpfen aus dem Behandlungsbad zu schützen, weil das Drehlager durch das Eindringen eines solchen flüssigen Mediums verkleben oder durch das Eindringen eines flüssigen Mediums und/oder eines dampfförmigen Mediums mit Korrosionswirkung beschädigt werden kann.

Um eine solche Abdichtwirkung zu erzielen, können beispielsweise O-Dichtringe aus einem elastischen Material verwendet werden. Das elastische Material der O-Dichtringe muss dann aber eine hohe Beständigkeit gegenüber der Korrosionswirkung der flüssigen oder dampfförmigen Medien aufweisen, mit denen die Fördervorrichtung im Betrieb beaufschlagt wird.

Ferner ist bekannt, ergänzend zu solchen O-Dichtringen eine Strömung von Druckluft zu verwenden, durch welche das Drehlager von den korrodierenden flüssigen oder dampfförmigen Medien abgeschirmt wird.

Hierbei ist jedoch von Nachteil, dass ein Druckluftspeicher oder ein Kompressor zur laufenden Erzeugung von Druckluft zusammen mit einer das zu behandelnde Werkstück tragenden Werkstückhalterung durch die Behandlungsanlage bewegt werden muss, was einen hohen apparativen Aufwand zur Folge hat.

Die US 756 880 A, die den nächstliegenden Stand der Technik repräsentiert, offenbart eine Dichtungsanordnung zum Abdichten eines Zwischenraums zwischen einem ersten Bauteil und einem relativ zu dem ersten Bauteil beweglichen zweiten Bauteil, umfassend ein im montierten Zustand der Dichtungsanordnung mit einer radialen Dichtfläche an einer Umfangsfläche des zweiten Bauteils anliegendes Dichtelement und ein Vorspannelement, das im montierten Zustand der Dichtungsanordnung eine das Dichtelement in radialer Richtung der Längsachse des zweiten Bauteils gegen das zweite Bauteil pressende Anpresskraft auf das Dichtelement ausübt, wobei das Dichtelement relativ zu dem ersten Bauteil beweglich ist.

Die FR 2 643 968 A1 offenbart eine Dichtungsanordnung zum Abdichten eines Zwischenraums zwischen einem ersten Bauteil und einem relativ zu dem ersten Bauteil um eine Drehachse drehbaren zweiten Bauteil, umfassend ein im montierten Zustand der Dichtungsanordnung mit einer radialen Dichtfläche an einer Umfangsfläche des zweiten Bauteils anliegendes Dichtelement und ein Vorspannelement, das im montierten Zustand der Dichtungsanordnung eine das Dichtelement in radialer Richtung der Drehachse gegen das zweite Bauteil anpressende Anpresskraft auf das Dichtelement ausübt, wobei das Dichtelement relativ zu dem ersten Bauteil beweglich ist.

Der Vorliegenden Erfindung liegt die Aufgabe zugrunde, eine Dichtungsanordnung zum Abdichten zwischen einem ersten Bauteil und einem relativ zu dem ersten Bauteil um eine Drehachse drehbaren zweiten Bauteil zu schaffen, welche eine zuverlässige Dichtwirkung, eine hohe Medienbeständigkeit und einen einfachen Aufbau aufweist.

Diese Aufgabe wird durch eine Dichtungsanordnung nach Anspruch 1 gelöst.

Durch ein flächiges, vorzugsweise im wesentlichen vollflächiges, Anliegen der radialen Dichtfläche des Dichtelements an der Umfangsfläche des zweiten Bauteils wird eine besonders zuverlässige Abdichtung zwischen dem ersten Bauteil und dem zweiten Bauteil erzielt, die unempfindlich ist gegenüber Fertigungstoleranzen sowie gegenüber geringen Störungen der Dichtfläche im Betrieb der Dichtungsanordnung, beispielsweise durch Lackanhaftungen oder die Einwirkung von Chemikalien oder durch Abrieb an der Dichtfläche. Durch die von dem Vorspannelement auf das Dichtelement ausgeübte Anpresskraft wird eine hohe Dichtflächenpressung an der Kontaktfläche des Dichtelements mit dem zweiten Bauteil erzielt.

Die Ausdehnung der radialen Dichtfläche in der axialen Richtung der Drehachse beträgt vorzugsweise mindestens ungefähr 10 %, besonders bevorzugt mindestens ungefähr ein Drittel, insbesondere mindestens ungefähr die Hälfte, eines Radius der radialen Dichtfläche.

Bei einer bevorzugten Ausgestaltung der Erfindung weist das Dichtelement eine Dichtlippe auf, an welcher das Dichtelement längs einer im Wesentlichen linearen Dichtlinie an der Umfangsfläche des zweiten Bauteils anliegt.

Bei einer weiteren bevorzugten Variante weist das Dichtelement eine großflächige, vorzugsweise im Wesentlichen zylindrische, radiale Dichtfläche auf.

Das Dichtelement der erfindungsgemäßen Dichtungsanordnung ist bevorzugt ein einfaches Element, das leicht aus den unterschiedlichsten Materialien hergestellt werden kann.

Wenn das Dichtelement der erfindungsgemäßen Dichtungsanordnung keinen filigranen Aufbau aufweist, ist die erfindungsgemäße Dichtungsanordnung besonders leicht montierbar, ohne dass hierfür spezielles Werkzeug benötigt wird.

Die Montage der erfindungsgemäßen Dichtungsanordnung ist einfach, so dass Montagefehler, welche zu einer Undichtigkeit der Dichtungsanordnung führen könnten, minimiert sind.

Die vom Vorspannelement auf das Dichtelement ausgeübte Anpresskraft wird dadurch erzeugt, dass die Dichtungsanordnung eine Axialdruckerzeugungseinrichtung umfasst, mittels welcher mindestens ein Vorspannelement mit einer in axialer Richtung der Drehachse wirkenden axialen Druckkraft beaufschlagbar ist.

Unter der Einwirkung einer solchen axialen Druckkraft wird das Vorspannelement in axialer Richtung komprimiert, was zu einer Ausdehnung des Vorspannelements in radialer Richtung der Drehachse führt. Da das Vorspannelement auf seiner dem zweiten Bauteil abgewandten Seite, beispielsweise durch das erste Bauteil, abgestützt ist, führt diese Ausdehnung des Vorspannelements in der radialen Richtung dazu, dass das Vorspannelement die in radialer Richtung der Drehachse wirkende Anpresskraft auf das Dichtelement ausübt.

Vorzugsweise ist mindestens ein Vorspannetement mittels der Axialdruckerzeugungseinrichtung in der axialen Richtung der Drehachse komprimierbar.

Damit die Anpresskraft, mit welcher das Dichtelement gegen das zweite Bauteil gepresst wird, auf einen gewünschten Wert einstellbar ist, kann vorgesehen sein, dass die Axialdruckerzeugungseinrichtung mindestens ein Distanzelement zum Einstellen der auf das Dichtelement einwirkenden Anpresskraft umfasst.

Ein solches Distanzelement ist vorzugsweise in der axialen Richtung der Axialdruckerzeugungseinrichtung vor oder hinter dem Vorspannelement angeordnet. Es bestimmt durch seine Ausdehnung in der axialen Richtung, in welchem Ausmaß das Vorspannelement mittels der Axialdruckerzeugungseinrichtung in der axialen Richtung komprimierbar ist. Je stärker das Vorspannelement in der axialen Richtung komprimierbar ist, umso größer ist die Anpresskraft, welche das Vorspannelement aufgrund dieser axialen Kompression in radialer Richtung auf das Dichtelement ausübt.

Die Anpresskraft ist insbesondere dadurch einstellbar, dass eines oder mehrere solcher Distanzelemente der Dichtungsanordnung hinzugefügt oder entnommen werden oder das ein Distanzelement mit einer vorgegebenen Ausdehnung in der axialen Richtung durch ein anderes Distanzelement mit einer anderen Ausdehnung in der axialen Richtung ersetzt wird.

Die Axialdruckerzeugungseinrichtung umfasst mindestens ein Befestigungsmittel, mittels welchem mindestens ein Dichtelement und das erste Bauteil gegeneinander verspannbar sind.

Ein solches Befestigungsmittel kann insbesondere mit einem Gewinde versehen sein, welches vorzugsweise mit einem hierzu komplementären Gewinde zusammenwirkt, um das Dichtelement und das erste Bauteil gegeneinander zu verspannen.

Bei einer bevorzugten Ausgestaltung der Erfindung ist ferner vorgesehen, dass die Dichtungsanordnung mindestens eine Axialdichtung umfasst, welche einen Dichtspalt zwischen mindestens einem Dichtelement und dem ersten Bauteil abdichtet. Durch eine solche Axialdichtung kann das Eindringen von Schmutzpartikeln in die Dichtungsanordnung vermieden werden.

Vorzugsweise ist mindestens ein Vorspannelement radial innerhalb der Radialdichtung angeordnet, so dass das Vorspannelement durch die Axialdichtung vor dem Kontakt mit Schmutzpartikeln und/oder aggressiven Medien aus dem Bereich radial außerhalb der Axialdichtung geschützt ist.

Eine solche Axialdichtung kann insbesondere als ein O-Ring ausgebildet sein, der bevorzugt aus einem Elastomermaterial, z.B. Polyurethan, EPDM (Ethylen-Propylen-Dien-Kautschuk) oder dergleichen, hergestellt ist.

Vorzugsweise umfasst mindestens ein Vorspannelement der Dichtungsanordnung ein Elastomermaterial.

Besonders günstig ist es, wenn mindestens ein Vorspannelement der Dichtungsanordnung vollständig oder abschnittsweise aus einem Elastomermaterial gebilde ist. Ein zur Verwendung im Vorspannelement geeignetes Elastomermaterial ist beispielsweise Polyurethan.

Das Vorspannelement kann in einfacher Weise aus einem Ausgangsmaterial, beispielsweise durch Wasserstrahlschneiden, hergestellt werden.

Wenn das Vorspannelement durch eine axiale Abdichtung vor dem Eindringen von aggressivem Medium aus dem Außenraum der Dichtungsanordnung geschützt ist, kann das Vorspannelement aus einem Material hergestellt sein, welches sich vom Werkstoff unterscheidet, aus dem das Dichtelement hergestellt ist.

Das Vorspannelement ist vorzugsweise im Wesentlichen hohlzylindrisch ausgebildet.

Das Vorspannelement liegt im montierten Zustand der Dichtungsanordnung vorzugsweise flächig, insbesondere im Wesentlichen vollflächig, an dem Dichtelement an.

Die Fläche, mit welcher das Vorspannelement an dem Dichtelement anliegt, ist vorzugsweise im Wesentlichen zylindrisch ausgebildet.

Bei einer besonderen Ausgestaltung der Erfindung ist vorgesehen, dass mindestens ein Dichtelement zusätzlich zu der radialen Dichtfläche eine axiale Dichtfläche aufweist, die im montierten Zustand der Dichtungsanordnung an einer axialen Stirnfläche eines relativ zu dem ersten Bauteil drehbaren dritten Bauteils anliegt.

Durch eine solche zusätzliche axiale Abdichtfunktion des Dichtelements kann erreicht werden, dass das Dichtelement zusätzlich als Grobdichtung fungiert, welche das Eindringen von Schmutzpartikeln und/oder aggressiven Medien von außerhalb der Dichtungsanordnung zu der radialen Dichtfläche des Dichtelements verhindert.

Das dritte Bauteil kann insbesondere relativ zu dem ersten Bauteil drehbar angeordnet sein.

Ferner kann das dritte Bauteil vorzugsweise drehfest mit dem zweiten Bauteil verbunden sein.

Das dritte Bauteil kann auch einstückig mit dem zweiten Bauteil ausgebildet sein.

Das mindestens eine Dichtelement der Dichtungsanordnung ist vorzugsweise stationär relativ zu dem ersten Bauteil angeordnet. Hierzu kann ein formschlüssiges und/oder kraftschlüssiges Zusammenwirken zwischen Dichtelement und erstem Bauteil vorgesehen sein.

Um die bei einer Relativbewegung zwischen dem dritten Bauteil und dem Dichtelement an der axialen Dichtfläche auftretende Reibung zu reduzieren, kann vorgesehen sein, dass mindestens ein Dichtelement an der axialen Dichtfläche mit mindestens einer Ausnehmung versehen ist, durch welche die Größe der Kontaktfläche, mit welcher das Dichtelement im montierten Zustand der Dichtungsanordnung an dem dritten Bauteil anliegt, verringert wird.

Eine solche Ausnehmung kann beispielsweise als eine Nut, insbesondere als eine Ringnut, ausgebildet sein.

Um an der axialen Dichtfläche des Dichtelements eine ausreichende Dichtflächenpressung zu erzielen, kann vorgesehen sein, dass die Dichtungsanordnung eine Anpressvorrichtung umfasst, mittels welcher mindestens ein Dichtelement und das dritte Bauteil an der axialen Dichtfläche des Dichtelements gegeneinander pressbar sind.

Eine solche Anpressvorrichtung kann insbesondere ein Spannelement, beispielsweise in Form einer Spannplatte, und mindestens ein Befestigungsmittel umfassen, mittels welchem das Spannelement gegen das zweite Bauteil verspannbar ist.

Ferner kann eine solche Anpressvorrichtung mindestens ein Distanzelement umfassen, mittels welchem die Anpresskraft zwischen dem Dichtelement und dem dritten Bauteil einstellbar ist.

Eine solche Einstellung der Anpresskraft kann.insbesondere dadurch erfolgen, dass ein solches Distanzelement der Anpressvorrichtung hinzugefügt oder aus der Anpressvorrichtung entnommen wird, oder dadurch, dass ein solches Distanzelement gegen ein anderes Distanzelement mit einer anderen Ausdehnung in einer axialen Richtung der Anpressvorrichtung ausgetauscht wird.

Das Dichtelement ist vorzugsweise ringförmig ausgebildet.

Das Dichtelement kann einen Radialdichtabschnitt, welcher zumindest einen Teil der radialen Dichtfläche des Dichtelements trägt, und optional einen Axialdichtabschnitt, welcher eine axiale Dichtfläche des Dichtelements trägt, umfassen.

Dabei ist der Axialdichtabschnitt gegebenenfalls vorzugsweise einstückig mit dem Radialdichtabschnitt des Dichtelements ausgebildet.

Der Radialdichtabschnitt und/oder der Axialdichtabschnitt des Dichtelements sind vorzugsweise im Wesentlichen hohlzylindrisch ausgebildet und weisen vorzugsweise unterschiedliche Außendurchmesser auf.

Der Außendurchmesser des Axialdichtabschnitts ist vorzugsweise größer als der Außendurchmesser des Radialdichtabschnitts.

Mindestens ein Dichtelement der Dichtungsanordnung umfasst vorzugsweise ein Material, welches gegenüber den im Außenraum der Dichtungsanordnung auftretenden flüssigen oder dampfförmigen Medien resistent ist.

Insbesondere kann vorgesehen sein, dass mindestens ein Dichtelement ein PE (Polyethylen)-Material, ein PEEK (Polyetheretherketon)-Material, ein NBR (Nitril-Butadien-Kautschuk)-Material und/oder ein PTFE (Polytetrafluorethylen)-Material umfasst, vorzugsweise im Wesentlichen vollständig aus einem oder mehreren dieser Materialien gebildet ist. Die genannten Materialien weisen eine besonders hohe Resistenz gegenüber flüssigen und dampfförmigen Behandlungsmedien auf, insbesondere gegenüber dem Lackmaterial einer Elektrotauchlackierungsanlage und gegenüber den Medien einer Vorbehandlungsanlage, in welcher zu lackierende Werkstücke vor einer Elektrotauchlackierung vorbehandelt werden.

Die erfindungsgemäße Dichtungsanordnung eignet sich insbesondere zur Verwendung in einer Baugruppe, welche ein erstes Bauteil, ein relativ zu dem ersten Bauteil um eine Drehachse drehbares zweites Bauteil und eine erfindungsgemäße Dichtungsanordnung zum Abdichten zwischen dem ersten Bauteil und dem zweiten Bauteil umfasst.

Besonders geeignet ist die erfindungsgemäße Dichtungsanordnung zur Verwendung in einer Baugruppe, die in ihrem Betrieb zumindest zeitweise und zumindest teilweise mit einem flüssigen Medium und/oder einem dampfförmigen Medium beaufschlagt wird.

Eine solche Baugruppe umfasst vorzugsweise ferner ein Gleitlager, mittels welchem das erste Bauteil und das zweite Bauteil drehbar aneinander gelagert sind.

Eine erfindungsgemäße Baugruppe mit einer erfindungsgemäßen Dichtungsanordnung eignet sich insbesondere zur Verwendung in einer Fördervorrichtung zum Einbringen eines Werkstücks in ein Behandlungsbad eines flüssigen Mediums und zum Ausbringen des Werkstücks aus dem Behandlungsbad des flüssigen Mediums, welche eine Baugruppe der vorstehend genannten Art umfasst, die im Betrieb der Fördervorrichtung zumindest zeitweise und zumindest teilweise mit einem flüssigen Medium und/oder mit einem dampfförmigen Medium beaufschlagt wird.

Die erfindungsgemäße Dichtungsanordnung kann beispielsweise zum Abdichten zwischen einem Lagerbock (erstes Bauteil) und einer relativ zu dem Lagerbock um eine Drehachse drehbaren Drehwelle (zweites Bauteil) verwendet werden.

Ferner kann die erfindungsgemäße Dichtungsanordnung zum Abdichten zwischen einer Laufrolle (erstes Bauteil) und einer relativ zu der Laufrolle um eine Drehachse drehbaren Rollenwelle (zweites Bauteil) verwendet werden.

Die Dichtungsanordnung kann zwei oder mehr Dichtelemente umfassen, um eine radiale Abdichtwirkung an. mehreren voneinander beabstandeten Dichtstellen einer die Dichtungsanordnung umfassenden Baugruppe zu erzielen.

Dabei ist jedem Dichtelement der Dichtungsanordnung vorzugsweise jeweils ein Vorspannelement zugeordnet, das im montierten Zustand der Dichtungsanordnung eine das jeweils zugeordnete Dichtelement in radialer Richtung der Drehachse gegen das zweite Bauteil pressende Anpresskraft auf das jeweils zugeordnete Dichtelement ausübt.

Bei einer bevorzugten Ausgestaltung der erfindungsgemäßen Dichtungsanordnung kommt das Vorspannelement nicht mit flüssigen oder dampfförmigen Medien aus dem Außenraum der Dichtungsanordnung in Berührung.

Das Vorspannelement ist vorzugsweise auf der dem zweiten Bauteil abgewandten Seite des Dichtelements angeordnet und wird vorzugsweise durch eine Axialdichtung, insbesondere in Form eines O-Rings, vor den flüssigen oder dampfförmigen Medien aus dem Außenraum der Dichtungsanordnung geschützt.

Die Abdichtung zu dem zweiten Bauteil hin wird durch Anpressen des Dichtelements durch das Vorspannelement gegen das zweite Bauteil erzielt.

Das Vorspannelement ist dabei vorzugsweise als ein Eiastomer-Element ausgebildet.

Die Anpresskraft, welche das Vorspannelement auf das Dichtelement in radialer Richtung ausübt, kann dadurch eingestellt werden, dass eine kleinere Anzahl oder eine größere Anzahl von Distanzringen vor oder hinter dem Vorspannelement angeordnet werden.

Eine Komprimierung des Vorspannelements wird dadurch erreicht, dass das Dichtelement an dem ersten Bauteil festgelegt, insbesondere an das erste Bauteil angeschraubt, wird. Durch das Anziehen des Dichtelements gegen das erste Bauteil wird dann das Vorspannelement verpresst. Hierdurch wird die Anpresskraft auf die radiale Dichtfläche des Dichtelements aufgebaut und die Dichtwirkung an der radialen Dichtfläche erzeugt.

Dabei kann eine axiale Dichtfläche des Dichtelements optional zusätzlich als eine Grobdichtung fungieren, an welche ein drittes Bauteil angelegt und/oder angepresst wird.

Eine solche Grobdichtung kann insbesondere Lackmaterial oder Chemikalien aus dem Außenraum der Dichtungsanordnung von der radialen Dichtfläche des Dichtelements abhalten und somit die radiale Dichtfläche vor Abrieb durch Schmutzpartikel oder andere Feststoffe schützen.

Weitere Merkmale und Vorteile der Erfindung sind Gegenstand der nachfolgenden Beschreibung und der zeichnerischen Darstellung von Ausführungsbeispielen.

In den Zeichnungen zeigen:
- Fig. 1: eine perspektivische Darstellung einer verfahrbaren Werkstückhalterung einer Fördervorrichtung mit einem Basisteil, einem relativ zum Basisteil anhebbaren und absenkbaren Hubteil und einem relativ zu dem Hubteil drehbaren Drehteil, welcher eine Werkstückaufnahme für ein zu behandelndes Werkstück, insbesondere eine Fahrzeugkarosserie, aufweist;
- Fig. 2: eine Ansicht der Werkstückhalterung aus Fig. 1 von hinten, mit der Blickrichtung längs der Translationsrichtung des Basisteils, wobei der Hubteil zusammen mit dem Drehteil aus der in Fig. 1 dargestellten angehobenen Position in eine abgesenkte Position abgesenkt worden ist, in welcher der Drehteil vollständig in ein Behandlungsbad einer Anlage zur Oberflächenbehandlung von Werkstücken eingetaucht ist;
- Fig. 3: einen schematischen Schnitt durch eine Baugruppe der Werkstückhalterung aus den Fig. 1 und 2, welche einen Lagerbock, eine relativ zu dem Lagerbock um eine Drehachse drehbare Drehzelle und eine Dichtungsanordnung zum Abdichten zwischen dem Lagerbock und der Drehwelle umfasst;
- Fig. 4: eine vergrößerte Darstellung des Bereichs I aus Fig. 3;
- Fig. 5: eine perspektivische Darstellung einer zweiten Ausführungsform einer verfahrbaren Werkstückhalterung einer Fördervorrichtung mit einem Basisteil und einem relativ zu dem Basisteil drehbaren Drehteil, welcher eine Werkstückaufnahme für ein zu behandelndes Werkstück, insbesondere eine Fahrzeugkarosserie, aufweist, wobei der Basisteil seitlich neben einem Behandlungsbad einer Anlage zur Oberflächenbehandlung von Werkstücken und der Drehteil über dem Behandlungsbad angeordnet ist;
- Fig. 6: einen schematischen vertikalen Schnitt durch eine Gegenlaufrolle der verfahrbaren Werkstückhalterung aus Fig. 5;
- Fig. 7: eine vergrößerte Darstellung des Bereichs II aus Fig. 6;
- Fig. 8: eine vergrößerte Darstellung des Bereichs III aus Fig. 7; und
- Fig. 9: eine schematische Seitenansicht der Gegenlaufrolle aus Fig. 6 mit der Blickrichtung in Richtung des Pfeils 9 in Fig. 6.

Gleiche oder funktional äquivalente Elemente sind in allen Figuren mit denselben Bezugszeichen bezeichnet.

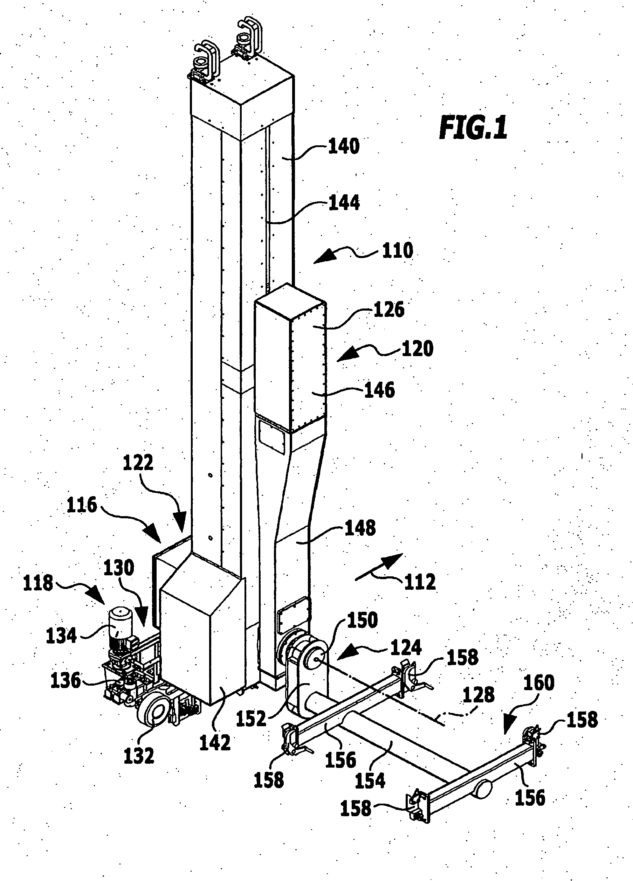

Eine mit 100 bezeichnete Anlage zur Oberflächenbehandlung von Werkstücken, insbesondere von (nicht dargestellten) Fahrzeugkarosserien, ist in den Fig. 1 bis 4 dargestellt.

Die Anlage 100 umfasst mindestens einen Behandlungsbereich 102, kann aber auch mehrere hintereinander angeordnete Behandlungsbereiche umfassen.

Der Behandlungsbereich 102 kann insbesondere als ein in einem Behandlungsbecken 104 angeordnetes Behandlungsbad 106 einer Behandlungsflüssigkeit ausgebildet sein.

Wenn es sich bei der Anlage 100 beispielsweise um eine Anlage zur elektrophoretischen oder autophoretischen Tauchlackierung von Werkstücken handelt, so ist der Behandlungsbereich 102 durch ein in einem Tauchbecken angeordnetes Bad aus einem elektrophoretischen oder autophoretischen Lack gebildet.

Die Anlage 100 kann aber auch eine Vorbehandlungsanlage zum Vorbehandeln der Oberfläche eines anschließend zu lackierenden Werkstücks oder eine Reinigungsanlage zum Reinigen der Oberfläche eines anschließend weiter zu behandelnden Werkstücks sein.

Insbesondere im Falle einer Reinigungsanlage ist es nicht erforderlich, dass der Behandlungsbereich. 102 ein Behandlungsbad 106 umfasst, in welches das zu behandelnde Werkstück eingetaucht wird; vielmehr kann es sich bei dem Behandlungsbereich 102 in diesem Fall um einen Raumbereich handeln, in dem das zu reinigende Werkstück mittels Flüssigkeits-, Dampf- und/oder Gasstrahlen beaufschlagt wird, um Schmutz von der Oberfläche des Werkstücks abzulösen. Von den zu reinigenden Werkstücken abtropfendes Reinigungsmedium kann in diesem Fall von einem Behandlungsbecken 104 aufgefangen werden.

Um die Werkstücke in den Behandlungsbereich 102 einbringen, durch den Behandlungsbereich 102 hindurch fördern und aus dem Behandlungsbereich 102 wieder ausbringen zu können, umfasst die Anlage 100 eine Fördervorrichtung 108, die ihrerseits eine Mehrzahl von unabhängig voneinander verfahrbaren Werkstückhalterungen 110 umfasst, welche jeweils eines der Werkstücke tragen.

Ferner umfasst die Fördervorrichtung 108 eine sich in einer Translationsrichtung 112 erstreckende Tragschiene 114, die vorzugsweise im Wesentlichen horizontal ausgerichtet ist. Es ist aber auch möglich, dass die Tragschiene 114 ansteigende und/oder abfallende Abschnitte aufweist, die gegenüber der Horizontalen geneigt sind, um die Höhle des Förderniveaus der Werkstückhalterungen 110 zu verändern.

Eine der Werkstückhalterungen 110 ist in den Fig. 1 bis 4 im Detail dargestellt.

Jede der Werkstückhalterungen 110 umfasst einen Basisteil 116, der mittels eines Translationsantriebs 118 längs der Translationsrichtung 112 verfahrbar ist, einen Hubteil 120, der mittels eines Hubantriebs 122 relativ zu dem Basisteil 116 anhebbar und absenkbar ist, und einen Drehteil 124, der relativ zu dem Hubteil 120 und damit auch relativ zu dem Basisteil 116 mittels eines Drehantriebs 126 um eine Drehachse 128 drehbar ist.

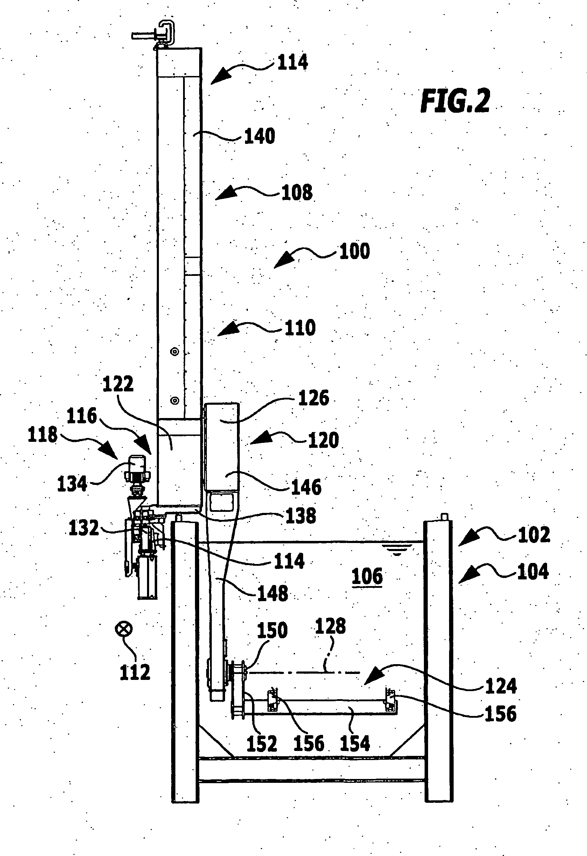

Die Drehachse 128 ist vorzugsweise im Wesentlichen horizontal und vorzugsweise im Wesentlichen senkrecht zur Translationsrichtung 112 ausgerichtet (siehe die Fig. 1 und 2).

Wie aus den Fig. 1 und 2 zu ersehen ist, umfasst der Basisteil 116 eine Rahmenkonstruktion 130, an welcher mehrere, beispielsweise zwei, Laufräder 132 um horizontale Drehachsen drehbar gelagert sind. Mit den Laufrädern 132 rollt der Basisteil 116 an der Tragschiene 114 ab.

Der Translationsantieb 118, mittels welchem der Basisteil 116 längs der Translationsrichtung 112 relativ zu der Tragschiene 114 verfahrbar ist, umfasst einen oder mehrere Reibradmotoren 134, von denen jeder ein um eine vertikale Drehachse drehbar gelagertes Reibrad 136 zu einer Drehbewegung antreibt.

Jedes Reibrad 136 liegt mit seiner Umfangsfläche unter elastischer Vorspannung an einer vertikalen Abrollfläche der Tragschiene 114 an, so dass die Reibräder 136 an der Tragschiene 114 in der Translationsrichtung 112 abrollen, wenn sie von den Reibradmotoren 134 zu einer Drehbewegung angetrieben werden.

Die Rahmenkonstruktion 130 des Basisteils 116 weist ferner einen horizontalen Ausleger 138 auf, welchen einen Hebeturm 140 trägt, an dessen unterem Ende ein Hubantriebsmotor 142 in einem Hubantriebsmotorgehäuse angeordnet ist.

Der Hubantriebsmotor 142 dient zum Antreiben einer Umlaufbewegung einer ringförmig geschlossenen Hubantriebskette, welche innerhalb des Hebeturms 140 über Umlenkrollen am unteren Ende und am oberen Ende des Hebeturms verläuft.

An einem Trum der Hubantriebskette ist der als ein Hubschlitten ausgebildete Hubteil 120 festgelegt; um dies zu ermöglichen, weist der Hebeturm 140 an seiner dem Hubteil 120 zugewandten Seite einen vertikal verlaufenden Durchtrittsschlitz 144 auf.

Der Hubteil 120 der Werkstückhalterung 110 umfasst einen an dessen oberem Ende angeordneten Drehantriebsmotor 146 in einem Drehantriebsmotorgehäuse und einen sich von dem Drehantriebsmotor 146 in vertikaler Richtung nach unten erstreckenden Haltearm 148, an dessen unterem Ende eine Drehwelle 150, welche koaxial zu der Drehachse 128 des Drehteils 124 der Werkstückhalterung 110 ausgerichtet ist, drehbar gelagert ist.

Die Drehwelle 150 ist durch den Drehantriebsmotor 146 mittels einer Antriebsübertragungsvorrichtung zu einer Drehbewegung relativ zu dem Hubteil 120 antreibbar.

Die Antriebsübertragungsvorrichtung kann beispielsweise ein Kettenvorgelege umfassen, mit einer Kette, die über ein drehfest mit der Drehwelle 150 verbundenes Ritzel umläuft und von dem Drehantriebsmotor 146 zu einer Umlaufbewegung antreibbar ist.

Der Drehteil 124 der Werkstückhalterung 110 ist drehfest mit der Drehwelle 150 verbunden und umfasst einen sich in radialer Richtung von der Drehachse 128 weg erstreckenden Dreharm 152, der an seinem der Drehwelle 150 abgewandten freien Ende eine beispielsweise ungefähr zylindrische Traverse 154 trägt, die sich im Wesentlichen parallel zur Drehachse 128 auf der dem Hubteil 120 abgewandten Seite des Dreharms 152 von demselben weg erstreckt.

Die Traverse 154 trägt zwei senkrecht zur Längsrichtung der Traverse 154 ausgerichtete, in der Längsrichtung der Traverse 154 voneinander beabstandete und im Wesentlichen parallel zueinander ausgerichtete Längsträger 156.

Die Längsträger 156 tragen an ihren beiden Endbereichen jeweils eine Arretiervorrichtung 158 zum Arretieren des Werkstücks, insbesondere einer Fahrzeugkarosserie, an den Längsträgern 156, welche somit gemeinsam mit der Traverse 154 eine Werkstückaufnahme 160 bilden, an der das zu behandelnde Werkstück, insbesondere eine Fahrzeugkarosserie, während des Behandlungsvorgangs gehalten ist.

Fig. 2 zeigt die Werkstückhalterung 110 in einem Zustand, in dem der Hubteil 120 (und damit auch der Drehteil 124) sich in einer relativ zu dem Basisteil 116 maximal nach unten abgesenkten Position befindet, in welcher der Drehteil 124 (gegebenenfalls mit dem daran angeordneten Werkstück) vollständig in das Behandlungsbad 106 eingetaucht ist.

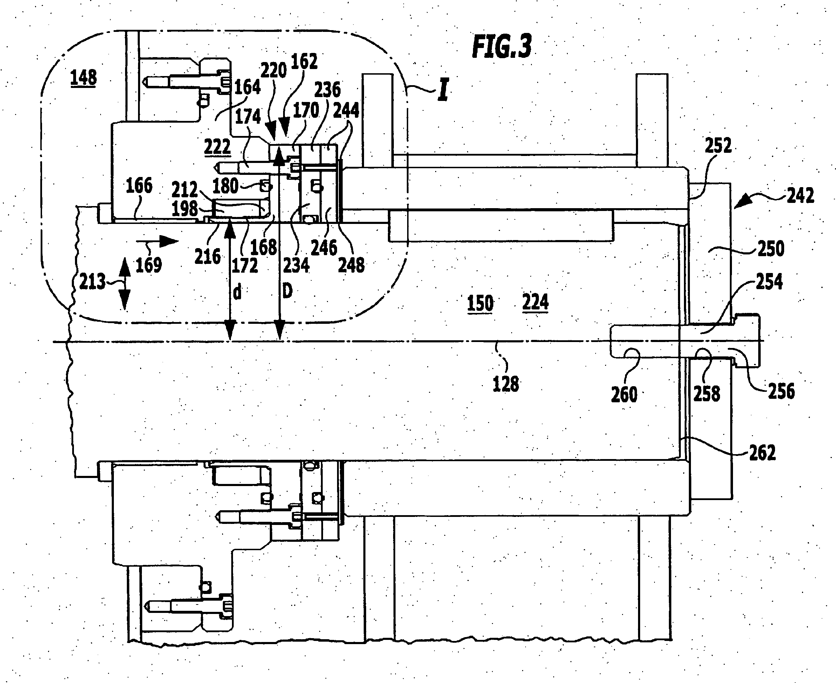

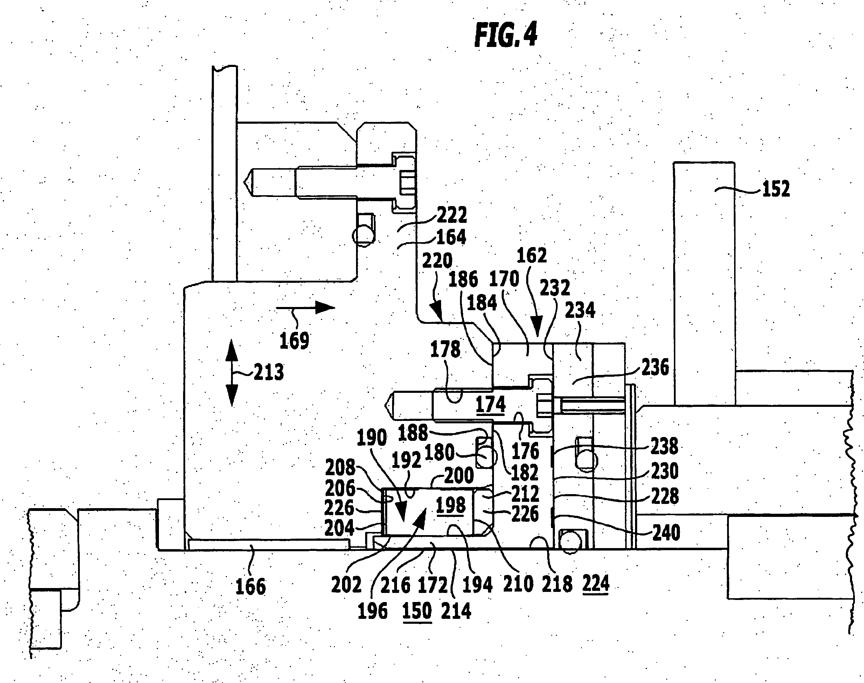

Um zu verhindern, dass flüssiges Behandlungsmedium aus dem Behandlungsbad 106 in das Drehlager eindringt, mittels welchem die Drehwelle 150 drehbar an dem Hubteil 120 gelagert ist, ist die Werkstückhalterung 110 mit einer Dichtungsanordnung 162 versehen, welche nachstehend unter Bezugnahme auf die Fig. 3 und 4 im Einzelnen beschrieben wird.

Am unteren Ende des Haltearms 148 des Hubteils 120 ist ein Lagerbock 164 festgelegt, durch welchen sich die Drehwelle 150 hindurch erstreckt.

Die radial innen liegende Seite des Lagerbocks 164 trägt ein Gleitlager 166, an welchem sich die Drehwelle 150 längs ihres Umfangs abstützt.

An einer axial vorderen, dem Dreharm 152 zugewandten Seite des.Lagerbocks 164 ist ein ringförmiges Dichtelement 168 angeordnet, welches einen in einer parallel zur Drehachse 128 verlaufenden und zum freien Ende der Drehwelle 150 hin gerichteten Axialrichtung 169 vorne liegenden Axialdichtabschnitt 170 mit einem größeren Außendurchmesser D und einen in der Axialrichtung 169 dahinterliegenden Radialdichtabschnitt 172 mit einem kleineren Außendurchmesser d umfasst.

Der Axialdichtabschnitt 170 und der Radialdichtabschnitt 172 des Dichtelements 168 sind vorzugsweise einstückig miteinander ausgebildet.

Der Axialdichtabschnitt 170 des Dichtelements 168 und der Lagerbock 164 sind mittels mehrerer Befestigungsmittel 174 in Form von Befestigungsschrauben gegeneinander verspannt, wobei jedes der Befestigungsmittel 174 jeweils eine Befestigungsmitteldurchtrittsöffnung 176 im Axialdichtabschnitt 170 des Dichtelements 168 durchsetzt und mit einem Gewindeabschnitt in ein Gewindesackloch 178 des Lagerbocks 164 eingeschraubt ist.

Ferner umfasst die Dichtungsanordnung 162 eine Axialdichtung 180, welche einen Dichtspalt 182 zwischen einer vorderen Stirnfläche 184 des Lagerbocks 164 und einer hinteren Stirnfläche 186 des Axialdichtabschnitts 170 des Dichtelements 168 abdichtet.

Die Axialdichtung 180 kann beispielsweise als ein O-Ring, vorzugsweise aus einem Elastomermaterial, ausgebildet sein.

Die Axialdichtung 180 kann in einer Ringnut 188, welche an der vorderen Stirnfläche 184 des Lagerbocks 164 ausgebildet ist, aufgenommen sein.

Ferner weist der Lagerbock 164 an seiner vorderen Stirnfläche 184 eine mittige Ausnehmung 190 auf, in welche sich der Radialdichtabschnitt 172 des Dichtelements 168 hinein erstreckt.

Eine Umfangswand 192 der Ausnehmung 190 weist einen größeren Außendurchmesser auf als der Radialdichtabschnitt 172 des Dichtelements 168, so dass zwischen der Umfangswand 192 der Ausnehmung 190 einerseits und einer äußeren Umfangsfläche 194 des Radialdichtabschnitts 172 des Dichtelements 168 andererseits ein Zwischenraum 196 ausgebindet ist, in dem ein, insbesondere ringförmiges, Vorspannelement 198 angeordnet ist.

Das Vorspannelement 198 umfasst ein Elastomermaterial und ist vorzugsweise im Wesentlichen vollständig aus einem Elastomermaterial gebildet.

Ein geeignetes Elastomermaterial ist beispielsweise Polyurethan.

Das Vorspannelement 198 liegt mit einer äußeren Umfangsfläche 200 flächig an der Umfangswand 192 der mittigen Ausnehmung 190 und mit einer inneren Umfangsfläche 202 flächig an der Umfangsfläche 194 des Radialdichtabschnitts 172 des Dichtelements 168 an.

Zwischen einer in der Axialrichtung 169 hinten liegenden Stirnfläche 204 des Vorspannelements 198 und einer Bodenfläche 206 der Ausnehmung 190 sind ein oder mehrere ringförmige Distanzscheiben 208 angeordnet.

Zwischen einer in der Axialrichtung 169 vorne liegenden Stirnfläche 210 des Vorspannelements 198 und der hinteren Stirnfläche 186 des Axialdichtabschnitts 170 des Dichtelements 168 ist ein Stützring 212 angeordnet.

Bei einer Variante der beschriebenen Dichtungsanordnung 162 kann aber auch vorgesehen sein, dass der Stützring 212 entfällt und die vordere Stirnfläche 210 des Vorspannelements 198 unmittelbar an dem Axialdichtabschnitt 170 des Dichtelements 168 anliegt.

Durch das Anziehen des Axialdichtabschnitts 170 des Dichtelements 168 gegen den Lagerbock 164 wird bei der Montage der Dichtungsanordnung 162 eine in der Axialrichtung 169 der Dichtungsanordnung 162 und parallel zur Drehachse 128 wirkende axiale Druckkraft erzeugt, welche in der Längsrichtung des Vorspannelements 198 auf dasselbe einwirkt und dieses zumindest teilweise elastisch zusammendrückt.

Aufgrund der Elastizität des Vorspannelements 198 wird hierdurch eine Druckkraft in einer quer zur Axialrichtung 169 verlaufenden Radialrichtung 213 in dem Vorspannelement 198 erzeugt, so dass das Vorspannelement 198 im montierten Zustand der Dichtungsanordnung 162 eine das Dichtelement 168 in radialer Richtung der Drehachse 128 gegen die Drehwelle 150 pressende Anpresskraft auf den Radialdichtabschnitt 172 des Dichtelements 168 ausübt.

Eine innere Umfangsfläche 214 des Radialdichtabschnitts 172 des Dichtelements 168, welche als eine radiale Dichtfläche 216 des Dichtelements 168 dient, wird durch diese Anpresskraft an eine Umfangsfläche 218 der Drehwelle 150 angedrückt und dichtet somit zwischen dem Dichtelement 168 und der Drehwelle 150 ab, so dass kein Medium aus dem Behandlungsbereich 102 zwischen diesen Bauteilen hindurch zu dem Gleitlager 166 gelangen kann.

Die radiale Dichtfläche 216 liegt im Wesentlichen vollflächig an der Drehwelle 150 an.

Der Axialdichtabschnitt 170 des Dichtelements 168, der Lagerbock 164, die Distanzscheiben 208 und gegebenenfalls der Stützring 212 bilden somit zusammen mit den Befestigungsmitteln 174 eine Axialdruckerzeugungseinrichtung 220, mittels welcher das Vorspannelement 198 mit einer in axialer Richtung der Drehachse 128 wirkenden axialen Druckkraft aufschlagbar ist, so dass das Vorspannelement 198 im montierten Zustand der Dichtungsanordnung 162 eine das Dichtelement 168 in radialer Richtung der Drehachse 128 gegen die Drehwelle 150 pressende Anpresskraft auf das Dichtelement 168 ausübt, so dass das Dichtelement 168 zuverlässig zwischen dem als ein erstes Bauteil 222 dienenden Lagerbock 164 und der als ein zweites Bauteil 224 dienenden Drehwelle 150 abdichtet.

Dabei ist die von der Axialdruckerzeugungseinrichtung 220 auf das Vorspannelement 198 ausgeübte Kompression und damit die auf das Dichtelement 168 wirkende Anpresskraft dadurch in gewünschter Weise einstellbar, dass die gesamte Ausdehnung der als Distanzelement 226 wirksamen Distanzscheiben 208 und gegebenenfalls des Stützrings 212 in der Axialrichtung 169 variiert wird, und zwar entweder durch Entfernen oder Hinzufügen solcher Distanzelemente 226 oder durch das Austauschen eines oder mehrerer der Distanzelemente 226 durch ein anderes Distanzelement 226 mit einer anderen Ausdehnung in der Axialrichtung 169.

Durch die gesamte Ausdehnung der Distanzelemente 226 in der Axialrichtung 169 wird nämlich die Ausdehnung des Vorspannelements 198 in seiner zur Axialrichtung 169 parallelen Längsrichtung bestimmt und damit das Ausmaß, in welchem das Vorspannelement 198 in seiner Längsrichtung durch die Axial-druckerzeugungseinrichtung 220 komprimierbar ist.

Je stärker das Vorspannelement 198 in der Axialrichtung komprimierbar ist, um so größer ist die dadurch erzeugte Anpresskraft, mit welcher das Vorspinnelement 198 das Dichtelement 168 in der Radialrichtung gegen die Drehwelle 150 presst.

Das Vorspannelement 198 ist in einem kleineren radialen Abstand von der Drehachse 128 angeordnet als die Axialdichtung 180, so dass das Vorspannelement 198 durch die Axialdichtung 180 vor dem Kontakt mit dem Medium aus dem Behandlungsbereich 102 geschützt ist.

Als Material für das Vorspannelement 198 kann daher insbesondere auch ein Material verwendet werden, welches gegenüber diesem Medium nicht korrosionsbeständig ist.

Eine dem Lagerbock 164 abgewandte vordere Stirnfläche 228 des Axialdichtabschnitts 170 des Dichtelements 168 dient als eine axiale Dichtfläche 230 des Dichtelements 168, die im montierten Zustand der Dichtungsanordnung 162 an einer hinteren axialen Stirnfläche 232 einer zusammen mit der Drehwelle 150 relativ zu dem Dichtelement 168 drehbaren Stützscheibe 234 anliegt.

Die Stützscheibe 234 bildet bei der beschriebenen Ausführungsform somit ein drittes Bauteil 236, und der Axialdichtabschnitt 170 des Dichtelements 168 dichtet zwischen diesem dritten Bauteil 236 und dem als erstes Bauteil 222 dienenden Lagerbock 164 ab.

Dabei ist das dritte Bauteil 236 vorzugsweise drehfest mit dem zweiten Bauteil 224 (Drehwelle 150) verbunden, während das Dichtelement 168 relativ zu dem ersten Bauteil 222 (Lagerbock 164) stationär angeordnet ist.

Um die Reibung zwischen der Stützscheibe 234 und dem Axialdichtabschnitt 170 des Dichtelements 168 bei einer Bewegung der Stützscheiben 234 relativ zu dem Dichtelement 168 zu vermindern, ist das Dichtelement 168 an seiner axialen Dichtfläche 230 vorzugsweise mit einer oder mehreren Ausnehmungen 238, beispielsweise in Form von Ringnuten 240, versehen, durch welche die Größe der Kontaktfläche, mit welcher das Dichtelement 168 im montierten Zustand der Dichtungsanordnung 162 an dem dritten Bauteil 236 (Stützscheibe 234) anliegt, verringert wird.

Um eine ausreichende Abdichtung zwischen dem Axialdichtabschnitt 170 des Dichtelements 168 und der Stützscheibe 234 zu erzielen, umfasst die Dichtungsanordnung 162 ferner eine Anpressvorrichtung 242, mittels welcher die Stützscheibe 234 und das Dichtelement 168 an der axialen Dichtfläche 230 des Dichtelements 168 gegeneinander pressbar sind.

Diese Anpressvorrichtung 242 umfasst, wie am Besten aus Fig. 3 zu ersehen ist, ein oder mehrere Distanzelemente 244 in Form einer weiteren Stützscheibe 246 und in Form von Distanzscheiben 248, die zwischen der Stützscheibe 234 und dem Dreharm 152 angeordnet sind, so dass eine in der Axialrichtung wirkende Anpresskraft von dem Dreharm 152 auf die Stützscheibe 234 übertragbar ist, sowie eine Spannplatte 250, welche eine dem Lagerbock 164 und der Stützscheibe 234 abgewandte vordere Stirnfläche 252 des Dreharms 152 hintergreift und mittels eines Befestigungsmittels 254, beispielsweise eines Gewindebolzens 256, gegen die Drehwelle 150 verspannbar ist.

Insbesondere kann vorgesehen sein, dass sich das Befestigungsmittel 254 durch eine Durchtrittsöffnung 258 in der Spannplatte 250 hindurch erstreckt und mit einem Gewindeabschnitt in ein Gewindesackloch 260, das in einer freien vorderen Stirnfläche 262 der Drehwelle 150 vorgesehen ist, eingedreht ist.

Durch Eindringen des Befestigungsmittel 254 in das Gewindesackloch 260 der Drehwelle 150 wird die Spannplatte 250 gegen den Dreharm 152 gepresst, welcher diese Anpresskraft in Axialrichtung durch die Distanzelemente 244 auf die Stützscheibe 234 überträgt, welche dadurch gegen die axiale Dichtfläche 230 des Dichtelements 168 gepresst wird.

Das Dichtelement 168 umfasst vorzugsweise ein Kunststoffmaterial, insbesondere ein PE-Material, ein PEEK-Material, ein NBR-Material und/oder ein PTFE-Material.

Vorzugsweise ist das Dichtelement 168 im Wesentlichen vollständig aus einem Kunststoffmaterial, insbesondere aus einem PE-Material, einem PEEK-Material, einem NBR-Material und/oder einem PTFE-Material gebildet.

Die vorstehend beschriebene Anlage 100 zur Oberflächenbehandlung von Werkstücken, insbesondere von Fahrzeugkarosserien, funktioniert wie folgt:

Wenn sich eine Werkstückhalterung 110 mit einem an der Werkstückaufnahme 160 arretierten Werkstück einer vorderen Stirnwand des Behandlungsbeckens 104 nähert, wird der Hubteil 120 durch Betätigung des Hubantriebs 122 zunächst relativ zum Basisteil 116 angehoben, und der Drehteil 124 mit dem daran angeordneten Werkstück wird durch Betätigung des Drehantriebs 126 relativ zu dem Hubteil 120 um die Drehachse 128 gedreht, um das Werkstück von einer Standardstellung, in welcher eine Längsrichtung des Werkstücks im Wesentlichen horizontal ausgerichtet ist, in eine Vertikalstellung zu überführen, in welcher die Längsrichtung des Werkstücks im Wesentlichen vertikal ausgerichtet ist.

Nach Erreichen der Vertikalstellung wird, unter Fortsetzung der Translationsbewegung des Basisteils 116 längs der Translationsrichtung 112, der Hubteil 120 der Werkstückhalterung 110 durch Betätigung des Hubantriebs 122 relativ zu dem Basisteil 116 abgesenkt, so dass das Werkstück im Wesentlichen senkrecht und unter sehr geringem Abstand von der vorderen Stirnwand des Behandlungsbeckens 104 in das Behandlungsbad 106 eintaucht.

Unter Fortsetzung der Translationsbewegung des Basisteils 116 längs der Translationsrichtung 112 wird der Hubteil 120 bis zum Erreichen der maximal abgesenkten Stellung weiter abgesenkt und dabei gleichzeitig der Drehteil 124 relativ zu dem Hubteil 120 durch Betätigung des Drehantriebs 126 so gedreht, dass das Werkstück von der Vertikalstellung in eine Kopfüberstellung gebracht wird, in welcher die Längsrichtung des Werkstücks im Wesentlichen horizontal ausgerichtet ist und das Werkstück gegenüber seiner Ausgangsstellung (Standardstellung) um 180° um eine horizontale Drehachse gedreht ist.

Während sich das Werkstück im Behandlungsbad 106 befindet und durch die Translationsbewegung des Basisteils 116 längs der Translationsrichtung 112 durch das Behandlungsbad 106 hindurch gefördert wird, erfolgt die Behandlung in dem Behandlungsbad 106, insbesondere eine, beispielsweise kataphoretische, Tauchlackierung des Werkstücks.

Das zu behandelnde Werkstück und die Dichtungsanordnung 162 mit dem Lagerbock 164, der Drehwelle 150 und der Stützscheibe 234 sowie mit dem Dichtelement 168 sind dabei vollständig in das Behandlungsbad 106 eingetaucht. Durch die axiale Abdichtung an der axialen Dichtfläche 230 und mittels der Axialdichtung 180 sowie durch die radiale Abdichtung an der radialen Dichtfläche 216 wird dabei verhindert, dass Medium aus dem Behandlungsbad 106 zu dem Gleitlager 166 oder zu dem Vorspannelement 198 gelangt.

Bei Annäherung der Werkstückhalterung 110 an eine hintere Stirnwand des Behandlungsbeckens 104 wird, unter Fortsetzung der Translationsbewegung des Basisteils 116 längs der Translationsrichtung 112, der Hubteil 120 durch Betätigung des Hubantriebs 122 wieder aus seiner maximal abgesenkten Position angehoben, während zugleich das Werkstück durch Drehung des Drehteils 124 relativ zu dem Hubteil 120 mittels des Drehantriebs 126 von der Kopfüberstellung in eine weitere Vertikalstellung überführt wird, in welcher die Längsrichtung des Werkstücks im Wesentlichen vertikal ausgerichtet ist.

In dieser Vertikalstellung des Werkstücks kann Behandlungsflüssigkeit aus dem Innenraum und aus den Hohlräumen des Werkstücks in das Behandlungsbecken 104 abfließen.

Anschließend wird das Werkstück, unter Fortsetzung der Translationsbewegung des Basisteils 116 längs der Translationsrichtung 112, durch Drehung des Drehteils 124 relativ zu dem Hubteil 120 mittels des Drehantriebs 126 wieder in die Standardstellung überführt, in welcher die Längsrichtung des Werkstücks im Wesentlichen horizontal ausgerichtet ist. Dabei wird gleichzeitig der Hubteil 120 durch Betätigung des Hubantriebs 122 von seiner maximal angehobenen Position relativ zu dem Basisteil 116 in eine zwischen der maximal angehobenen Position und der maximal abgesenkten Position des Hubteils 120 liegende mittlere Position bewegt.

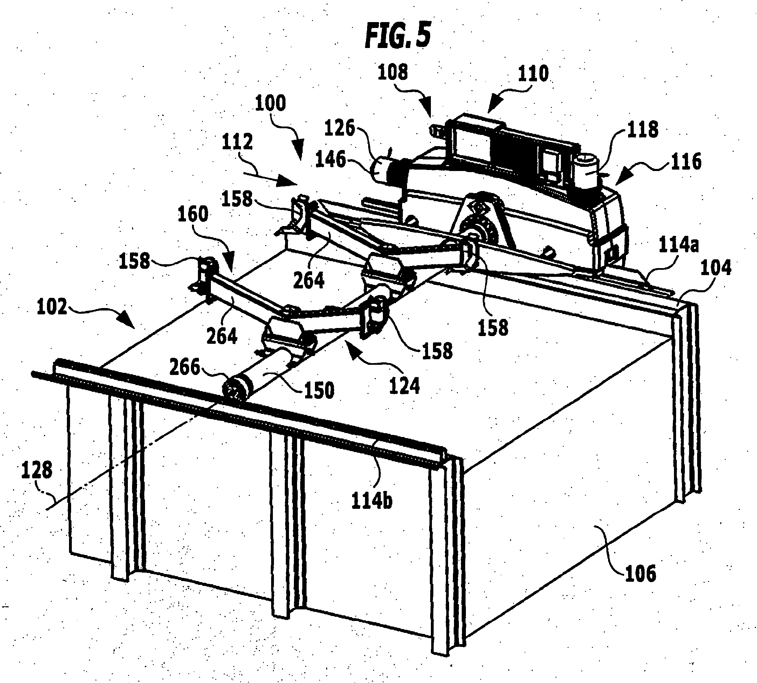

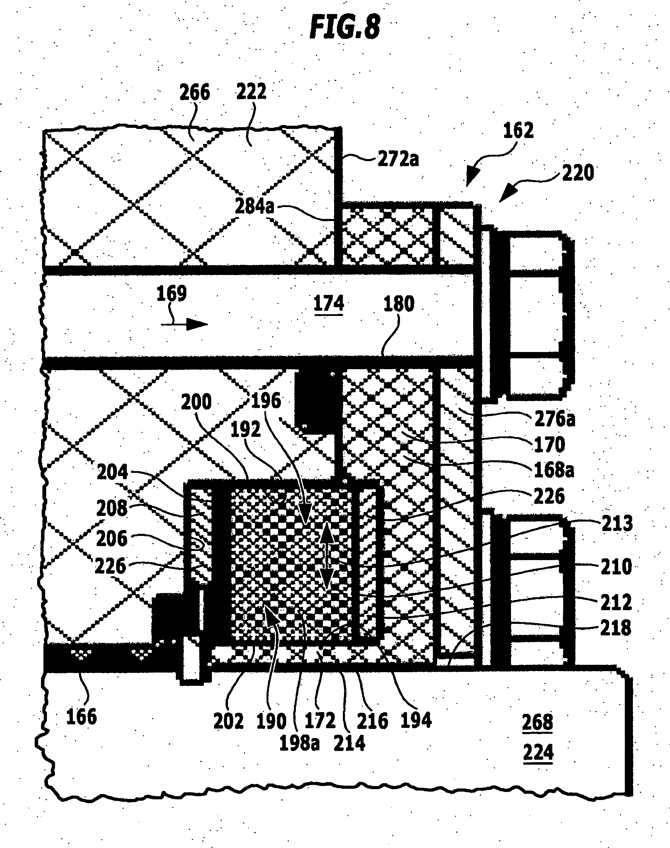

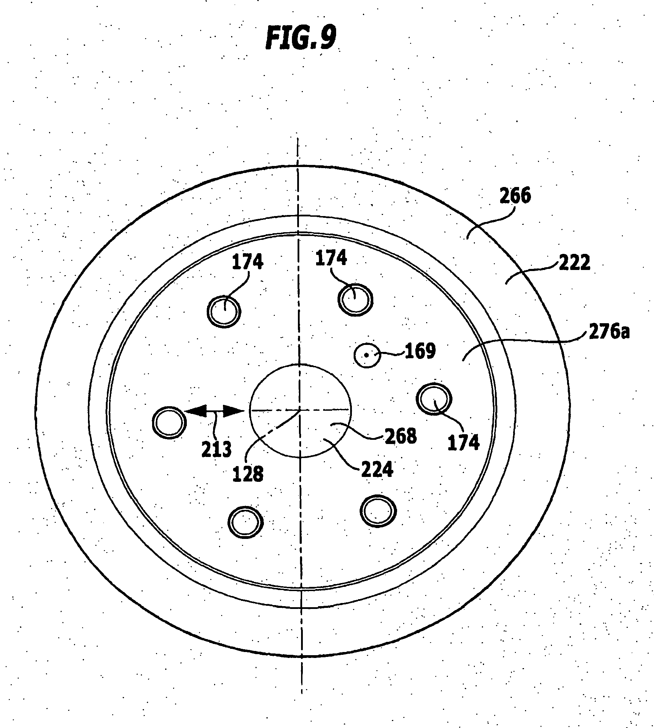

Eine zweite Ausführungsform einer Anlage 100 zur Oberflächenbehandlung von Werkstücken, insbesondere von (nicht dargestellten) Fahrzeugkarosserien, ist in den Fig. 5 bis 9 dargestellt.

Auch diese Anlage 100 umfasst mindestens einen Behandlungsbereich 102, der insbesondere als ein in einem Behandlungsbecken 104 angeordnetes Behandlungsbad 106 einer Behandlungsflüssigkeit ausgebildet sein kann.

Um die Werkstücke in den Behandlungsbereich 102 einbringen, durch den Behandlungsbereich 102 hindurch fördern und aus dem Behandlungsbereich 102 wieder ausbringen zu können, umfasst die Anlage 100 eine Fördervorrichtung 108, die ihrerseits eine Mehrzahl von unabhängig voneinander verfahrbaren Werkstückhalterungen 110 umfasst, welche jeweils eines der Werkstücke tragen.

Ferner umfasst die Fördervorrichtung 108 zwei sich in einer Translationsrichtung 112 erstreckende Tragschienen 114, die vorzugsweise im Wesentlichen horizontal ausgerichtet sind.

Dabei verläuft eine erste Tragschiene 114a auf einer ersten Seite des Behandlungsbeckens 104 und eine zweite Tragschiene 114b, welche parallel zu der ersten Tragschiene 114a ausgerichtet ist, auf einer der ersten Seite gegenüberliegenden zweiten Seite des Behandlungsbeckens 104.

Jede der Werkstückhalterungen 110 umfasst einen Basisteil 116, der mittels eines Translationsantriebs 118 längs der Translationsrichtung 112 verfahrbar ist, und einen Drehteil 124, der relativ zu dem Basisteil 116 mittels eines Drehantriebs 126 um eine Drehachse 128 drehbar ist.

Der Basisteil 116 stützt sich mittels (nicht dargestellter) Laufrollen an der ersten Tragschiene 114a ab.

Die Drehachse 128 ist vorzugsweise im Wesentlichen horizontal und vorzugsweise im Wesentlichen senkrecht zur Translationsrichtung 112 ausgerichtet (siehe Fig. 5).

Der Drehteil 124 umfasst eine koaxial zu der Drehachse 128 ausgerichtete und an dem Basisteil 116 drehbar gelagerte Drehwelle 150, die durch einen an dem Basisteil angeordneten Drehantriebsmotor 146 zu einer Drehbewegung relativ zu dem Basisteil 116 antreibbar ist.

Die Drehwelle 150 trägt zwei quer zur Drehachse 128 ausgerichtete Haltetraversen 264, die im Wesentlichen parallel zueinander ausgerichtet sind und in Richtung der Drehachse 128 voneinander beabstandet sind.

Die Quertraversen 264 tragen an ihren beiden Endbereichen jeweils eine Arretiervorrichtung 158 zum Arretieren des Werkstücks, insbesondere einer Fahrzeugkarosserie, an den Quertraversen 264, welche somit gemeinsam mit der Drehwelle 150 eine Werkstückaufnahme 160 bilden, an der das zu behandelnde Werkstück, insbesondere eine Fahrzeugkarosserie, während des Behandlungsvorgangs gehalten ist.

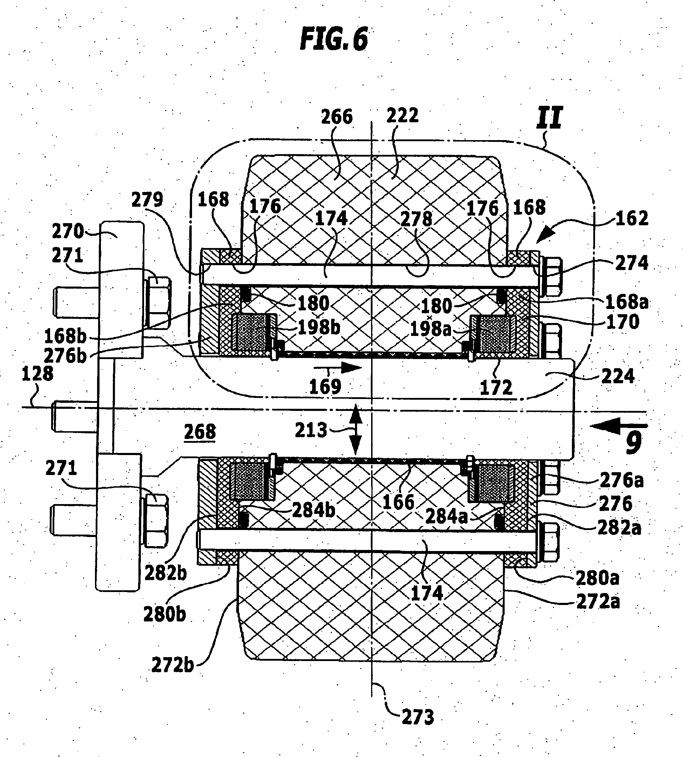

Die Drehwelle 150 stützt sich an der zweiten Tragschiene 114b mittels einer im Folgenden als Laufrolle 266 bezeichneten Gegenlaufrolle ab, die drehbar an einer Rollenwelle 268 gelagert ist (siehe Fig. 6), welche ihrerseits drehfest an dem dem Basisteil 116 abgewandten freien Ende der Drehwelle 150 festgelegt ist.

Die Festlegung der Rollenwelle 268 an der Drehwelle 150 kann dabei mittels eines Befestigungsflansches 270 erfolgen, der von Befestigungsmitteln 271 durchsetzt wird, welche in (nicht dargestellte) Gewindesacklöcher an der freien Stirnfläche der Drehwelle 150 eingeschraubt sind.

Um zu verhindern, dass Spritzer von flüssigem Behandlungsmedium aus dem Behandlungsbad 106 oder von dem Behandlungsbad 106 abgegebene Dämpfe in das Drehlager der Laufrolle 266 eindringen, mittels welchem die Laufrolle 266 drehbar an der Rollenwelle 268 gelagert ist, ist die Werkstückhalterung 110 mit einer Dichtungsanordnung 162 versehen, welche nachstehend unter Bezugnahme auf die Fig. 6 bis 9 im Einzelnen beschrieben wird.

An der inneren Umfangsfläche der Laufrolle 266 ist ein Gleitlager 166 angeordnet, an welchem sich die Laufrolle 266 längs ihres Umfangs abstützt.

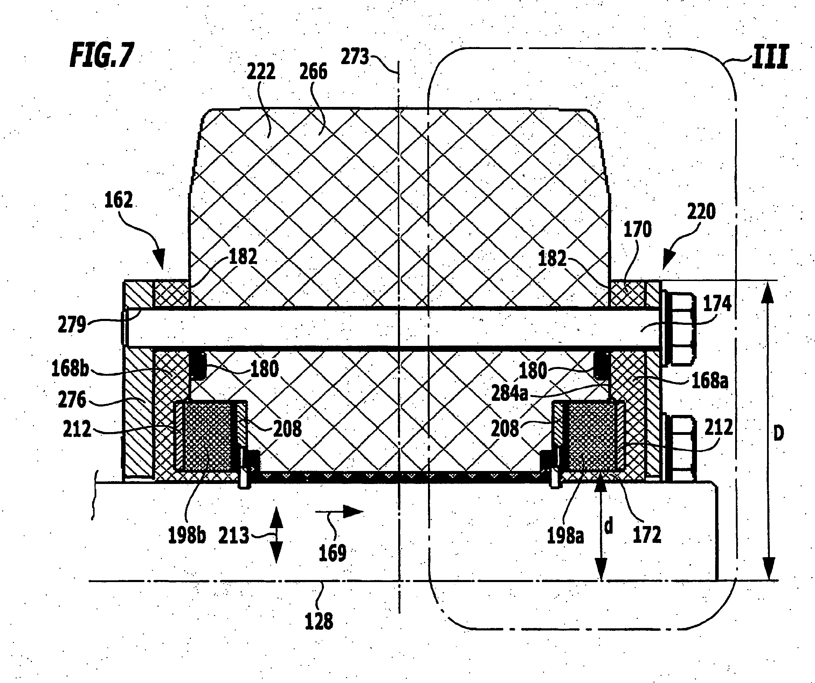

An einer axial vorderen, der Drehwelle 150 und dem Basisteil 116 abgewandten vorderen Stirnfläche 277 der Laufrolle 266 ist ein erstes ringförmiges Dichtelement 168a angeordnet, welches einen in einer parallel zur Drehachse 128 verlaufenden und zum freien Ende der Rollenwelle 268 hin gerichteten Axialrichtung 169 vorne liegenden Axialdichtabschnitt 170 mit einem größeren Außendurchmesser D und einen in der Axialrichtung 169 dahinterliegenden Radialdichtabschnitt 172 mit einem kleineren Außendurchmesser d umfasst (siehe insbesondere Fig. 7).

Der Axialdichtabschnitt 170 und der Radialdichtabschnitt 172 des Dichtelements 168a sind vorzugsweise einstückig miteinander ausgebildet.

An einer axial hinteren, der Drehwelle 150 und dem Basisteil 160 zugewandten Seite der Laufrolle 266 ist ein zweites ringförmiges Dichtelement 168b angeordnet, welches im Wesentlichen spiegelsymmetrisch (bezüglich einer Quermittelebene 273 der Laufrolle 266, welche senkrecht zur Drehachse 128 ausgerichtet ist) zu dem ersten Dichtelement 168a ausgebildet und angeordnet ist.

Das zweite Dichtelement 168b umfasst somit einen in der Axialrichtung 169 hinten liegenden Axialdichtabschnitt 170 mit einem größeren Außendurchmesser D und einen in der Axialrichtung 169 davor liegenden Radialdichtabschnitt 172 mit einem kleineren Außendurchmesser d.

Auch der Axialdichtabschnitt 170 und der Radialdichtabschnitt 172 des zweiten Dichelements 168b sind vorzugsweise einstückig miteinander ausgebildet.

Die beiden Dichtelemente 168a und 168b und die Laufrolle 266 sind mittels mehrerer Befestigungsmittel 174 in Form von Befestigungsschrauben gegeneinander verspannt, wobei jedes der Befestigungsmittel 174 jeweils eine Befestigungsmitteldurchtrittsöffnung 274 in einer ersten Stützscheibe 276a, eine Befestigungsmitteldurchtrittsöffnung 176 im Axialdichtabschnitt 170 des ersten Dichtelements 168a, einen Befestigungsmittelkanal 278 in der Laufrolle 266 und eine Befestigungsmitteldurchtrittsöffnung 176 im Axialdichtabschnitt 170 des zweiten Dichtelements 168b durchsetzt und mit einem Gewindeabschnitt in ein Gewindeloch 279 in einer zweiten Stützscheibe 276b eingeschraubt ist.

Dabei liegt die erste Stützscheibe 276a mit einer hinteren Stirnfläche 280a flächig an einer vorderen Stirnfläche 282 des Axialdichtabschnitts 170 des ersten Dichtelements 168a an, und die zweite Stützscheibe 276b liegt mit einer vorderen Stirnfläche 280b flächig an einer hinteren Stirnfläche 282b des Axialdichtabschnitts 170 des zweiten Dichtelements 168b an.

Ferner umfasst die Dichtungsanordnung 162 zwei Axialdichtungen 180, welche jeweils einen Dichtspalt 182 zwischen einer vorderen Stirnfläche 272a der Laufrolle 266 und einer hinteren Stirnfläche 284a des Axialdichtabschnitts 170 des ersten Dichtelements 168a bzw. einen Dichtspalt 182 zwischen einer hinteren Stirnfläche 272b der Laufrolle 266 und einer vorderen Stirnfläche 284b des Axialdichtabschnitts 170 des zweiten Dichtelements 168b abdichtet. Diese Axialdichtungen 180 können beispielsweise jeweils als ein O-Ring, vorzugsweise aus einem Elastomermaterial, ausgebildet sein.

Die Axialdichtungen 180 können in jeweils einer Ringnut 188, welche an der vorderen Stirnfläche 272a bzw. an der hinteren Stirnfläche 272b der Laufrolle 266 ausgebildet ist, aufgenommen sein.

Ferner weist die Laufrolle 266 an ihrer vorderen Stirnfläche 272a eine mittige Ausnehmung 190 auf, in welche sich der Radialdichtabschnitt 172 des ersten Dichtelements 168a hinein erstreckt.

Eine Umfangswand 192 der Ausnehmung 190 weist einen größeren Außendurchmesser auf als der Radialdichtabschnitt 172 des Dichtelements 168a, so dass zwischen der Umfangswand 192 der Ausnehmung 190 einerseits und einer äußeren Umfangsfläche 194 des Radialdichtabschnitts 172 des Dichtelements 168a andererseits ein Zwischenraum 196 ausgebildet ist, in dem ein, insbesondere ringförmiges, erstes Vorspannelement 198a angeordnet ist.

Das Vorspannelement 198a umfasst ein Elastomermaterial und ist vorzugsweise im Wesentlichen vollständig aus einem Elastomermaterial gebildet.

Ein geeignetes Elastomermaterial ist beispielsweise Polyurethan.

Das Vorspannelement 198a liegt mit einer äußeren Umfangsfläche 200 flächig an der Umfangswand 192 der mittigen Ausnehmung 190 und mit einer inneren Umfangsfläche 202 flächig an der Umfangsfläche 194 des Radialdichtabschnitts 172 des Dichtelements 168a an.

Zwischen einer in der Axialrichtung 169 hinten liegenden Stirnfläche 204 des Vorspannelements 198a und einer Bodenfläche 206 der Ausnehmung 190 sind ein oder mehrere ringförmige Distanzscheiben 208 angeordnet. Zwischen einer in der Axialrichtung 169 vorne liegenden Stirnfläche 210 des Vorspannelements 198a und der hinteren Stirnfläche 284a des Axialdichtabschnitts 170 des Dichtelements 168a ist ein Stützring 212 angeordnet.

Bei einer Variante der beschriebenen Dichtungsanordnung 162 kann aber auch vorgesehen sein, dass der Stützring 212 entfällt und die vordere Stirnfläche 210 des Vorspannelements 198a unmittelbar an dem Axialdichtabschnitt 170 des Dichtelements 168 anliegt.

An ihrer hinteren Stirnfläche 272b weist die Laufrolle 266 ebenfalls eine mittige Ausnehmung 190 auf, in welche sich der Radialdichtabschnitt 172 des zweiten Dichtelements 168b hinein erstreckt.

In dieser weiteren Ausnehmung 190 ist ein zweites Vorspannelement 198b mit einer oder mehreren ringförmigen Distanzscheiben 208 und gegebenenfalls mit einem Stützring 212 im Wesentlichen spiegelsymmetrisch (bezüglich der Quermittelebene 273 der Laufrolle 266) zu dem ersten Vorspannelement 198a und den demselben benachbarten Distanzscheiben 208 sowie dem gegebenenfalls dem ersten Vorspannelement 198a benachbarten Stützring 212 ausgebildet und angeordnet.

Durch das Anziehen der Axialdichtabschnitte 170 der Dichtelemente 168a und 168b gegen die Laufrolle 266 wird bei der Montage der Dichtungsanordnung 162 eine in der Axialrichtung 169 der Dichtungsanordnung 162 und parallel zur Drehachse 128 wirkende axiale Druckkraft erzeugt, welche in der Längsrichtung der Vorspannelemente 198a und 198b auf dieselben einwirkt und diese zumindest teilweise elastisch zusammendrückt.

Aufgrund der Elastizität der Vorspannelemente 198a und 198b wird hierdurch eine Druckkraft in einer quer zur Axialrichtung 196 verlaufenden Radialrichtung 213 in den Vorspannelementen 198a und 198b erzeugt, so dass die Vorspannelemente 198a und 198b im montierten Zustand der Dichtungsanordnung 162 eine das jeweils zugeordnete Dichtelement 168a bzw. 168b in radialer Richtung der Drehachse 128 gegen die Rollenwelle 268 pressende Anpresskraft auf den Radialdichtabschnitt 172 des betreffenden Dichtelements 168a, 168b ausüben.

Eine innere Umfangsfläche 214 des Radialdichtabschnitts 172 jedes Dichtelements 168a, 168b, welche als eine radiale Dichtfläche 216 des jeweiligen Dichtelements 168a, 168b dient, wird durch diese Anpresskraft an eine Umfangsfläche 218 der Rollenwelle 268 angedrückt und dichtet somit zwischen dem jeweiligen Dichtelement 168a, 168b und der Rollenwelle 268 ab, so dass kein Medium aus dem Behandlungsbereich 102 zwischen diesen Bauteilen hindurch zu dem Gleitlager 166 gelangen kann.

Dabei liegen die radialen Dichtflächen 216 der Dichtelemente 168a und 168b im Wesentlichen vollflächig an der Rollenwelle 268 an.

Die Stützscheiben 276a und 276b, die Axialdichtabschnitte 170 der Dichtelemente 168a und 168b, die Laufrolle 266, die Distanzscheiben 208 und gegebenenfalls die Stützringe 212 bilden somit zusammen mit den Befestigungsmitteln 174 eine Axialdruckerzeugungseinrichtung 220, mittels welcher die Vorspannelemente 198a, 198b mit einer in axialer Richtung der Drehachse 128 wirkenden axialen Druckkraft beauschlagbar sind, so dass die Vorspannelemente 198a, 198b im montierten Zustand der Dichtungsanordnung 162 eine das jeweils zugeordnete Dichtelement 168a, 168b in radialer Richtung der Drehachse 128 gegen die Rollenwelle 268 pressende Anpresskraft auf das betreffende Dichtelement 168a, 168b ausüben, so dass die Dichtelemente 168a und 168b zuverlässig zwischen der als ein erstes Bauteil 222 dienenden Laufrolle 266 und der als ein zweites Bauteil 224 dienenden Rollenwelle 268 abdichtet.

Dabei ist die von der Axialdruckerzeugungseinrichtung 220 auf die Vorspannelemente 198a und 198b ausgeübte Kompression und damit die auf die Dichtungselemente 168a, 168b wirkende Anpresskraft dadurch in gewünschter Weise einstellbar, dass die als Distanzelemente 226 wirksamen Distanzscheiben 208 und gegebenenfalls der Stützring 212 entfernt oder hinzugefügt werden oder dass eines oder mehrere dieser Distanzelemente 226 durch ein anderes Distanzelemente 226 mit einer anderen Ausdehnung in der Axialrichtung 169 ausgetauscht wird, da die gesamte Ausdehnung der Distanzelemente 226 in der Axialrichtung 169 die Ausdehnung der Vorspannelemente 198a und 198b in ihrer zur Axialrichtung 169 parallelen Längsrichtung bestimmt und damit das Ausmaß, in welchem die Vorspannelemente 198a, 198b in ihrer Längsrichtung durch die Axialdruckerzeugungseinrichtung 220 komprimierbar sind.

Je stärker die Vorspannelemente 198a und 198b in der Axialrichtung komprimierbar sind, umso größer ist die durch die Kompression erzeugte Anpresskraft, mit welcher die Vorspannelemente 198a, 198b das jeweils zugeordnete Dichtelement 168a bzw. 168b in der Radialrichtung gegen die Rollenwelle 268 pressen.

Die Vorspannelemente 198a, 198b sind in einem kleineren radialen Abstand von der Drehachse 128 angeordnet als die Axialdichtungen 180, so dass die Vorspannelemente 198a, 198b durch die Axialdichtungen 180 vor dem Kontakt mit dem Medium aus dem Behandlungsbereich 102 geschützt sind.

Als Material für die Vorspannelemente 198a, 198b kann daher insbesondere auch ein Material verwendet werden, welches gegenüber diesem Medium nicht korrosionsbeständig ist.

Die Dichtelemente 168a und 168b umfassen vorzugsweise ein Kunststoffmaterial, insbesondere ein PE-Material, ein PEEK-Material, ein NBR-Material und/oder ein PTFE-Material.

Vorzugsweise sind die Dichtelemente 168a und/oder 168b im Wesentlichen vollständig aus einem Kunststoffmaterial, insbesondere aus einem PE-Material, einem PEEK-Material, einem NBR-Material und/oder einem PTFE-Material gebildet.

Die vorstehend beschriebene zweite Ausführungsform einer Anlage 100 zur Oberflächenbehandlung von Werkstücken, insbesondere von Fahrzeugkarosserien, funktioniert wie folgt:

Wenn sich eine Werkstückhalterung 110 mit einem an der Werkstückaufnahme 160 arretierten Werkstück einer vorderen Stirnwand des Behandlungsbeckens 104 nähert, wird der Drehteil 124 mit dem daran angeordneten Werkstück durch Betätigung des Drehantriebs 126 relativ zu dem Basisteil 116 um die Drehachse 128 gedreht, um das Werkstück in das Behandlungsbad 106 einzutauchen.

Während sich das Werkstück im Behandlungsbad 106 befindet und durch die Translationsbewegung des Basisteils 116 längs der Translationsrichtung 112 durch das Behandlungsbad 106 hindurch gefördert wird, erfolgt die Behandlung in dem Behandlungsbad 106, insbesondere eine, beispielsweise kataphoretische, Tauchlackierung des Werkstücks.

Während der Translationsbewegung der Werkstückhalterung 110 längs der Translationsrichtung 112 rollt die Laufrolle 266, mittels welcher die Drehwelle 150 an der zweiten Tragschiene 114b abgestützt ist, an der zweiten Tragschiene 114b ab.

Durch diese Abrollbewegung und durch die Drehbewegung der Drehwelle 150 relativ zu dem Basisteil 116 wird eine Drehbewegung der Welle 268 relativ zu der Laufrolle 266 um die Drehachse 128 erzeugt.

Durch die axiale Abdichtung mittels der Axialdichtungen 180 sowie durch die radiale Abdichtung an den radialen Dichtflächen.216 der Dichtelemente 168a und 168b wird dabei verhindert, dass Spritzer von flüssigem Medium aus dem Behandlungsbad 106 oder Dämpfe aus dem Behandlungsbad 106 zu dem Gleitlager 166 oder zu den Vorspannelementen 198a, 198b gelangen.

Bei Annäherung der Werkstückhalterung 110 an eine hintere Stirnwand des Behandlungsbeckens 104 wird, unter Fortsetzung der Translationsbewegung des Basisteils 116 längs der Translationsrichtung 112, das Werkstück durch Drehung der Drehteils 124 relativ zu dem Basisteil 116 mittels des Drehantriebs 126 wieder aus dem Behandlungsbad 106 ausgebracht.

## Patentansprüche

1. Dichtungsanordnung zum Abdichten eines Zwischenraums zwischen einem ersten Bauteil (222) und einem relativ zu dem ersten Bauteil (222) um eine Drehachse (128) drehbaren zweiten Bauteil (224),
umfassend
mindestens ein an dem ersten Bauteil (222) festgelegtes und im montierten Zustand der Dichtungsanordnung (162) mit einer radialen Dichtfläche (216) an einer Umfangsfläche (218) des zweiten Bauteils (224) anliegendes Dichtelement (168),
mindestens ein Vorspannelement (198), das im montierten Zustand der Dichtungsanordnung (162) eine das Dichtelement (168) in radialer Richtung der Drehachse (128) gegen das zweite Bauteil (224) pressende Anpresskraft auf das Dichtelement (168) ausübt, und
eine Axialdruckerzeugungseinrichtung (220), mittels welcher mindestens ein Vorspannelement (198) mit einer in axialer Richtung der Drehachse (128) wirkenden axialen Druckkraft beaufschlagbar ist,
wobei die Axialdruckerzeugungseinrichtung (220) mindestens ein Befestigungsmittel (174) umfasst, mittels welchem mindestens ein Dichtelement (168) und das erste Bauteil (222) gegeneinander verspannbar sind.

2. Dichtungsanordnung nach Anspruch 1, **dadurch gekennzeichnet, dass** mindestens ein Vorspannelement (198) mittels der Axialdruckerzeugungseinrichtung (220) in der axialen Richtung der Drehachse (128) komprimierbar ist.

3. Dichtungsanordnung nach einem der Ansprüche 1 oder 2, dadurch
gekenntzeichnet, dass die Axialdruckerzeugungseinrichtung (220) mindestens ein Distanzelement (226) zum Einstellen der Anpresskraft umfasst.

4. Dichtungsanordnung nach einem der Ansprüche 1 bis 3, **dadurch gekennzeichnet, dass** die Dichtungsanordnung (162) mindestens eine Axialdichtung (180) umfasst, welche einen Dichtspalt (182) zwischen mindestens einem Dichtelement (168) und dem ersten Bauteil, (222) abdichtet.

5. Dichtungsanordnung nach Anspruch 4, **dadurch gekennzeichnet, dass** mindestens ein Vorspannelement (198) radial innerhalb der Axialdichtung (180) angeordnet ist.

6. Dichtungsanordnung nach einem der Ansprüche 1 bis 5, **dadurch gekennzeichnet, dass** mindestens ein Vorspannelement (198) ein Elastomermaterial umfasst.

7. Dichtungsanordnung nach einem der Ansprüche 1 bis 6, **dadurch gekennzeichnet, dass** mindestens ein Dichtelement (168) eine axiale Dichtfläche (230) aufweist, die im montierten Zustand der Dichtungsanordnung (162) an einer axialen Stirnfläche (232) eines dritten Bauteils (236) anliegt.

8. Dichtungsanordnung nach Anspruch 7, **dadurch gekennzeichnet, dass** mindestens ein Dichtelement (168) an der axialen Dichtfläche (230) mit mindestens einer Ausnehmung (238) versehen ist, durch welche die Größe der Kontaktfläche, mit welcher das Dichtelement (168) im montierten Zustand der Dichtungsanordnung (162) an dem dritten Bauteil (236) anliegt, verringert wird.

9. Dichtungsanordnung nach einem der Ansprüche 7 oder 8, **dadurch gekennzeichnet, dass** die Dichtungsanordnung (162) eine Anpressvorrichtung (242) umfasst, mittels welcher mindestens ein Dichtelement (168) und das dritte Bauteil (236) an der axialen Dichtfläche (230) des Dichtelements (68) gegeneinander pressbar sind.

10. Dichtungsanordnung nach einem der Ansprüche 1 bis 9, **dadurch gekennzeichnet, dass** mindestens.ein Dichtelement (168) ein PE-Material, ein PEEK-Material, ein NBR-Material und/oder ein PTFE-Material umfasst.

11. Baugruppe, umfassend
ein erstes Bauteil (222),
ein relativ zu dem ersten Bauteil (222) um eine Drehachse (128) drehbares zweites Bauteil (224) und
eine Dichtungsanordnung (162) zum Abdichten zwischen dem ersten Bauteil (222) und dem zweiten Bauteil (224) nach einem der Ansprüche 1 bis 10.

12. Baugruppe nach Anspruch 11, **dadurch gekennzeichnet, dass** die Baugruppe in deren Betrieb zumindest zeitweise und zumindest teilweise mit einem flüssigen Medium und/oder mit einem dampfförmigen Medium beaufschlagt wird.

13. Fördervorrichtung zum Einbringen eines Werkstücks in ein Behandlungsbad (106) eines flüssigen Mediums und zum Ausbringen des Werkstücks aus dem Behandlungsbad (106) des flüssigen Mediums,
umfassend eine Baugruppe nach Anspruch 12, die im Betrieb der Fördervorrichtung (108) zumindest zeitweise und zumindest teilweise mit einem flüssigen Medium und/oder mit einem dampfförmigen Medium beaufschlagt wird

## Claims

1. A sealing arrangement for sealing off an intermediate space between a first component (222) and a second component (224) which is rotatable in relation to the first component (222) about an axis of rotation (128), including at least one sealing element (168) which is fixed on the first component (222) and, in the mounted condition of the sealing arrangement (162), abuts against a peripheral surface (218) of the second component (224) by means of a radial sealing surface (216),
at least one biasing element (198) which, in the mounted condition of the sealing arrangement (162), exerts on the sealing element (168) a contact pressure force that presses the sealing element (168) against the second component (224), in the radial direction of the axis of rotation (128), and
an axial pressure generating device (220) by means of which an axial pressure force that acts in the axial direction of the axis of rotation (128) is exertable on at least one biasing element (198),
wherein the axial pressure generating device (220) includes at least one securing means (174), by means of which at least one sealing element (168) and the first component (222) are clampable against one another.

2. A sealing arrangement according to Claim 1, **characterised in that** at least one biasing element (198) is compressible in the axial direction of the axis of rotation (128) by means of the axial pressure generating device (220).

3. A sealing arrangement according to one of Claims 1 or 2, **characterised in that** the axial pressure generating device (220) includes at least one spacer element (226) for adjusting the contact pressure force.

4. A sealing arrangement according to one of Claims 1 to 3, **characterised in that** the sealing arrangement (162) includes at least one axial seal (180) which seals a sealing gap (182) between at least one sealing element (168) and the first component (222).

5. A sealing arrangement according to Claim 4, **characterised in that** at least one biasing element (198) is arranged radially within the axial seal (180).

6. A sealing arrangement according to one of Claims 1 to 5, **characterised in that** at least one biasing element (198) comprises an elastomer material.

7. A sealing arrangement according to one of Claims 1 to 6, **characterised in that** at least one sealing element (168) has an axial sealing surface (230) which, in the mounted condition of the sealing arrangement (162), abuts against an axial end face (232) of a third component (236).

8. A sealing arrangement according to Claim 7, **characterised in that** at least one sealing element (168) is provided at the axial sealing surface (230) with at least one recess (238), as a result of which the size of the contact surface by means of which the sealing element (168) abuts against the third component (236) in the mounted condition of the sealing arrangement (162) is reduced.

9. A sealing arrangement according to one of Claims 7 or 8, **characterised in that** the sealing arrangement (162) includes a contact pressure device (242) by means of which at least one sealing element (168) and the third component (236) are pressable against one another at the axial sealing surface (230) of the sealing element (68).

10. A sealing arrangement according to one of Claims 1 to 9, **characterised in that** at least one sealing element (168) comprises a PE material, a PEEK material, an NBR material and/or a PTFE material.

11. An assembly, including
a first component (222),
a second component (224) which is rotatable in relation to the first component (222) about an axis of rotation (128), and
a sealing arrangement (162) for sealing between the first component (222) and the second component (224), according to one of Claims 1 to 10.

12. An assembly according to Claim 11, **characterised in that** a liquid medium and/or a vapour medium is applied to the assembly during operation thereof, at least at certain times and at least to part thereof.

13. A conveying device for introducing a workpiece into a treatment bath (106) of a liquid medium and for removing the workpiece from the treatment bath (106) of the liquid medium,
including an assembly according to Claim 12, to which a liquid medium and/or a vapour medium is applied during operation of the conveying device (108), at least at certain times and at least to part thereof.

## Revendications

1. Ensemble d'étanchéité servant à rendre étanche un espace inter-médiaire entre un premier composant (222) et un deuxième composant (224) pouvant tourner autour d'un axe de rotation (128) par rapport au premier composant (222), comprenant
au moins un élément étanche (168) fixé au niveau du premier composant (222) et reposant, à l'état monté de l'ensemble d'étan-chéité (162), par une surface étanche (216) radiale, au niveau d'une surface périphérique (218) du deuxième composant (224),
au moins un élément de précontrainte (198), qui exerce sur l'élément étanche (168), à l'état monté de l'ensemble d'étanchéité (162), une force de compression pressant l'élément étanche (168) dans la direction radiale de l'axe de rotation (128) contre le deuxième composant (224), et
un dispositif de production de pression axiale (220), au moyen duquel au moins un élément de précontrainte (198) peut être soumis à l'action d'une force de pression axiale agissant dans la direction axiale de l'axe de rotation (128),
le dispositif de production de pression axiale (220) comprenant au moins un moyen de fixation (174), au moyen duquel au moins un élément étanche (168) et le premier composant (222) peuvent être précontraints l'un contre l'autre.

2. Ensemble d'étanchéité selon la revendication 1, **caractérisé en ce qu'**au moins un élément de précontrainte (198) peut être compri-mé au moyen du dispositif de production de pression axiale (220) dans la direction axiale de l'axe de rotation (128).

3. Ensemble d'étanchéité selon l'une quelconque des revendications 1 ou 2, **caractérisé en ce que** le dispositif de production de pression axiale (220) comprend au moins un élément d'écartement (226) servant à régler la force de compression.

4. Ensemble d'étanchéité selon l'une quelconque des revendications 1 à 3, **caractérisé en ce que** l'ensemble d'étanchéité (162) comprend au moins un joint d'étanchéité axial (180), qui rend étanche une fente étanche (182) entre au moins un élément étanche (168) et le premier composant (222).

5. Ensemble d'étanchéité selon la revendication 4, **caractérisé en ce qu'**au moins un élément de précontrainte (198) est disposé de manière radiale à l'intérieur du joint d'étanchéité axial (180).

6. Ensemble d'étanchéité selon l'une quelconque des revendications 1 à 5, **caractérisé en ce qu'**au moins un élément de précontrainte (198) comprend un matériau élastomère.

7. Ensemble d'étanchéité selon l'une quelconque des revendications 1 à 6, **caractérisé en ce qu'**au moins un élément étanche (168) pré-sente une surface étanche (230) axiale, qui repose, dans l'état monté de l'ensemble d'étanchéité (162), au niveau d'une surface frontale (232) axiale d'un troisième composant (236).

8. Ensemble d'étanchéité selon la revendication 7, **caractérisé en ce qu'**au moins un élément étanche (168) est pourvu au niveau de la surface étanche (230) axiale d'au moins un évidement (238), par lequel la dimension de la surface de contact, par laquelle l'élément étanche (168) repose, dans l'état monté de l'ensemble d'étan-chéité (162), au niveau du troisième composant (236), est réduite.

9. Ensemble d'étanchéité selon l'une quelconque des revendications 7 ou 8, **caractérisé en ce que** l'ensemble d'étanchéité (162) com-prend un dispositif de compression (242), au moyen duquel au moins un élément étanche (168) et le troisième composant (236) peuvent être pressés l'un contre l'autre au niveau de la surface étanche (230) axiale de l'élément étanche (68).

10. Ensemble d'étanchéité selon l'une quelconque des revendications 1 à 9, **caractérisé en ce qu'**au moins un élément étanche (168) comprend un matériau PE, un matériau PEEK, un matériau NBR et/ou un matériau PTFE.

11. Groupe modulaire comprenant
un premier composant (222),
un deuxième composant (224) pouvant tourner autour d'un axe de rotation (128) par rapport au premier composant (222) et
un ensemble d'étanchéité (162) servant à rendre étanche un espace entre le premier composant (222) et le deuxième compo-sant (224) selon l'une quelconque des revendications 1 à 10.

12. Groupe modulaire selon la revendication 11, **caractérisé en ce que** le groupe modulaire est soumis, lors de son fonctionnement, au moins par intermittence et au moins en partie, à l'action d'un milieu fluide et/ou d'un milieu sous forme de vapeur.

13. Dispositif de transport servant à introduire une pièce à usiner dans un bain de traitement (106) d'un milieu liquide et servant à éva-cuer la pièce à usiner hors du bain de traitement (106) du milieu fluide,
comprenant un groupe modulaire selon la revendication 12, qui est soumis, lors du fonctionnement du dispositif de transport (108), au moins par intermittence et au moins en partie à l'action d'un milieu liquide et/ou d'un milieu sous forme de vapeur.
